**Europäisches Patentamt**

**European Patent Office**

**Office européen des brevets**

(19)

(11) Veröffentlichungsnummer : **0 553 370 B1**

(12) # EUROPÄISCHE PATENTSCHRIFT

(45) Veröffentlichungstag der Patentschrift :
02.08.95 Patentblatt 95/31

(51) Int. Cl.$^6$ : **H02P 7/62**

(21) Anmeldenummer : **92101293.6**

(22) Anmeldetag : **27.01.92**

(54) **Einrichtung zum Regeln der Drehzahl einer Drehfeldmaschine.**

(43) Veröffentlichungstag der Anmeldung :
04.08.93 Patentblatt 93/31

(45) Bekanntmachung des Hinweises auf die
Patenterteilung :
02.08.95 Patentblatt 95/31

(84) Benannte Vertragsstaaten :
**AT DE FR GB IT**

(56) Entgegenhaltungen :
**EP-A- 0 175 154**
**EP-A- 0 332 881**
**DE-A- 3 438 210**

(56) Entgegenhaltungen :
**19TH ANNUAL IEEE POWER ELECTRONICS**
**SPECIALISTS CONFERENCE, Bd. 2, 14. April**
**1988, KYOTO, Seiten 847 - 854; NAKANO ET**
**AL.: 'Sensor Less Field Oriented Control of an**
**Induction Motor Using an Instantaneous Slip**
**Frequency EstimationMethod'**
**CONFERENCE RECORD OF THE 1989 IEEE**
**INDUSTRY APPLICATIONS SOCIETY ANNUAL**
**MEETING PART 1, 5. Oktober 1989, SAN**
**DIEGO, Seiten 493 - 499; SCHAUDER: 'Adap-**
**tive Speed Identification for Vector Control of**
**Induction Motors Without Rotational Transdu-**
**cers'**

(73) Patentinhaber : **SIEMENS**
**AKTIENGESELLSCHAFT**
**Wittelsbacherplatz 2**
**D-80333 München (DE)**

(72) Erfinder : **Tröndle, Hans-Peter, Dr.-Ing.**
**Südhang 14**
**W-8550 Forchheim (DE)**
Erfinder : **Künzel, Stefan, Dipl.-Ing.**
**Am Europakanal 14**
**W-8520 Erlangen (DE)**

EP 0 553 370 B1

## Beschreibung

Die Erfindung bezieht sich auf eine Einrichtung zum Regeln der Drehzahl einer Drehfeldmaschine, wobei Mittel zum entsprechenden Generieren einer flußbildenden Stromkomponente und einer momentenbildenden Stromkomponente vorgesehen sind, wobei über einen ersten Wandler aus diesen kartesischen Stromkomponenten in Polarform ein entsprechender Ständerstrombetrag und ein zugehöriger Ständerstromwinkel gebildet werden, wobei diese Soll-Größen über einen weiteren Wandler die das Drehfeld der Maschine auslösenden Ströme bestimmen und wobei Mittel zum Regeln der Feldachse vorgesehen sind.

Als Werkzeugmaschinenantriebe sind bislang überwiegend Gleichstromantriebe eingesetzt worden. Diese Antriebe können leicht geregelt werden, erfordern jedoch aufgrund des Vorhandenseins eines Kommutators eine Wartung durch fachkundiges Personal. Insbesondere um eine völlige Wartungsfreiheit zu erreichen, werden in neuerer Zeit zunehmend Asynchronmaschinen verwendet. Durch das Fehlen des Kommutators entfällt dabei auch die drehzahlabhängige Leistungsbegrenzung, so daß das volle Motormoment auch im Stillstand verfügbar ist. Um dabei jedoch die erforderliche Qualität der Drehzahlregelung zu erreichen, sind ein im Vergleich zum Gleichstromantrieb aufwendiges Speiseglied mit zweimaliger Energieumformung (Drehstrom-Gleichspannung-Drehstrom) und eine komplexe Regelungsstruktur erforderlich. Der Fortschritt sowohl auf dem Gebiet der Leistungshalbleiter durch abschaltbare schnelle Schalter als auch in der Informationselektronik durch sehr leistungsfähige Mikroprozesoren erlaubt es nunmehr, Einrichtungen der eingangs genannten Art, die nach dem Prinzip der Feldorientierung arbeiten, für den auspruchvollen Einsatz bei Werkzeugmaschinen vorzusehen.

Aus der Zeitschrift Automasierungstechnische Praxis atp, 29. Jahrgang, Heft 2/1987, Seiten 83 bis 88 ist eine Einrichtung der eingangs genannten Art bekannt. Dabei ist es allerdings für die Drehzahlregelung erforderlich, daß an der Asynchronmaschine ein rotatorischer Weggeber vorgesehen ist.

Bei Weggebern handelt es sich um relativ aufwendige Geräte, da sie wegen ihrer Maschinennähe sehr hohen Umgebungsbelastungen ausgesetzt sind. Ferner wird durch die Verwendung von Weggebern die Einbaugröße des gesamten Aggregates ungünstig beeinflußt.

Aus der DE-OS 34 38 210 ist in diesem Zusammenhang ein Regelverfahren für eine Asynchronmaschine ohne Drehzahlrückführung und somit ohne Weggeber bekannt. Dabei wird aus den Sollwertkomponenten für den Ständerstrom und die Ständerspannung der Sollwert der Ständerleistung gebildet, dieser Sollwert wird mit dem ermittelten Istwert der Ständerleistung verglichen, die Regelabweichung wird einem Leistungsregler zugeführt und zur Bildung der Ständerfrequenz werden der vorgesteuerte Schlupffrequenzsollwert und das vom Leistungsregler abgegebene zusätzliche Frequenzsignal addiert. Bei dieser Schaltung besteht jedoch die Gefahr, daß auf Grund der reinen Auswertung der Wirkleistung ein Kippfall eintreten kann.

Aufgabe der Erfindung ist es, eine Einrichtung der eingangs genannten Art so auszubilden, daß eine Drehzahlregelung ohne die Verwendung eines Lagegebers möglich ist und daß dabei dennoch ein kippsicherer Betrieb gewährleistet ist.

Gemäß der Erfindung wird diese Aufgabe dadurch gelöst, daß Mittel zum Erfassen der Blindleistung und Wirkleistung der Drehfeldmaschine vorgesehen sind, daß aus der prinzipiellen Beziehung

$$\hat{\varepsilon} = \arctan (P_B / P_W)$$

mit

$P_B$ - Blindleistung und

$P_W$ - Wirkleistung

der vorliegende Ständerstromwinkel in einem Rechenwerk bestimmt wird, daß ein der Differenz zwischen dem Soll-Ständerstromwinkel und dem aus der obigen Beziehung bestimmten Ständerstromwinkel entsprechendes Signal einem Feldwinkelrregler zugeleitet wird, dessen Ausgangssignal additiv mit einem dem Schlupf der Drehfeldmaschine entsprechenden Signal eine Sollfrequenz für den weiteren Wandler vorgibt und daß das Ausgangssignal des Feldwinkelreglers als eine der Ist-Drehzahl der Drehfeldmaschine entprechende Größe für die Drehzahlregelung dient.

Anstatt der Soll-Ist-Differenz der Wirkleistung zur Nachführung des Feldwinkels wie bei der DE-OS 34 38 210 wird der Ständerstromwinkel somit in Feldkoordinanten aus der gemessenen Wirk- und Blindleistung errechnet und mit dem Sollwert verglichen. Dadurch vermeidet man die Abhängigkeit der Streckenverstärkung von anderen Größen, insbesondere ist der Feldwinkelregelkreis auch für Ständerstromwinkel größer 90° stabil. Dadurch wird also die Kippsicherheit entprechend der Aufgabe der vorliegenden Erfindung ganz entscheidend erhöht; kleinere Abtastfrequenzen und ein sicherer Feldschwächbetrieb sind möglich.

Damit auch der Schlupf aus den elektrischen Größen der Einrichtung bestimmt werden kann, ist es vorteilhaft, daß der Schlupf über einen Schlupfbestimmungsglied als eine dem Quotienten aus der momentenbildenden Stromkomponente und dem vorliegenden Fluß proportionale Größe bestimmt wird.

Auch diese Flußgröße kann durch relativ einfache Meßgrößenverknüpfungen indirekt dadurch ermittelt

EP 0 553 370 B1

werden, daß Mittel zum Messen des Betrags des fließenden Ständerstroms vorgesehen sind und daß der vorliegende Fluß ermittelt wird als siehe da

$$= k \cdot \sqrt{P_W{}^2 + P_B{}^2} \cdot \frac{1}{|i_s|} \cdot \frac{1}{2\pi f^*}$$

mit

k       - Konstante
$|i_s|$       - vorliegender Ständerstrombetrag
f*       Sollfrequenz.

Ein Ausführungsbeispiel der Erfindung ist in der Darstellung gezeigt und wird im folgenden näher erläutet. Dabei zeigen:

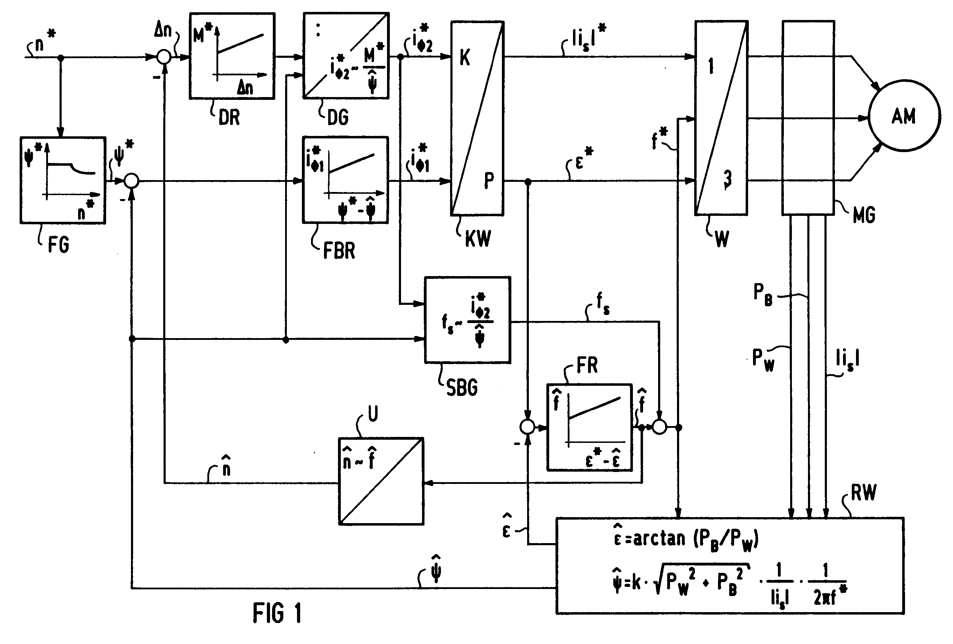

FIG 1       ein Blockschaltbild und
FIG 2       ein Zeigerdiagramm

Bei der erfindungsgemäßen Schaltung wird eingangsseitig eine Solldrehzahl n* vorgegeben. Die Solldrehzahl n* wird mit der Istdrehzahl $\hat{n}$, auf deren Genenieren im folgenden noch eingegangen wird, verglichen und das Differenzergebnis $\Delta n$ gelangt an den Eingang eines Drehzahlreglers DR. Dieser kann nach Art eines PI-Reglers ausgebildet sein. Am Ausgang des Drehzahlreglers DR steht dann ein einem Sollmoment M* entsprechendes Ausgangssignal an. Dieses Signal gelangt an einen ersten Eingang eines Divisionsgliedes DG, an dessen anderem Eingang ein dem Fluß einer anzusteuerten Asynchronmaschine AM entstrechendes Signal $\hat{\psi}$ vorliegt. Auf die Bildung dieses Signals wird im folgenden noch eingegangen. Die momentenbildende Stromkomponente der Asychrommaschine AM, die im folgenden als $i_{\Phi 2}^*$ bezeichnet wird, ist proportional dem Quotienten aus dem Sollmoment M* und dem Fluß $\hat{\psi}$, so daß $i_{\Phi 2}^*$ durch diesen mit einem konstanten Faktor zu bewertenden Qotienten im Divisionsglied DG ermittelt werden kann. Die momentenbildende Stromkomponente $i_{\Phi 2}^*$ gelangt dann an einen Koordinatenwandler KW.

An dieser Stelle sei darauf hingewiesen, daß mit dem Zeichen * jeweils Sollgrößen bezeichnet sind und mit dem Zeichen ^ errechnete bzw. indirekt ermittelte Größen gekennzeichnet sind.

Die Solldrehzahl n* gelangt ferner an ein Feldschwächungsglied FG, das jeder Solldrehzahl n* einen Sollfluß $\psi^*$ zuordnet. Dieser Sollfluß $\psi^*$ wird mit dem vorliegenden Fluß $\hat{\psi}$ verglichen und das Differenzergebnis gelangt an einen Feldbetragsregler FBR. Dieser kann ebenfalls nach Art eines PI-Reglers ausgebildet sein und an seinem Ausgang steht ein flußbildender Strom $i_{\Phi 1}^*$ an, der dem zweiten Eingang des Koordinatenwandlers KW zugeleitet wird. Die zueinander kartesischen Stromkomponenten $i_{\Phi 1}^*$ und $i_{\Phi 2}^*$ werden im Koordinatenwandler KW in Polarkoordinaten umgeformt. Demzufolge liegt am Ausgang des Koordinatenwandlers KW zum einen ein dem Ständerstrombetrag entsprechender Sollwert $|i_s|^*$ und ein dem Ständerstromwinkel in Feldkoordinaten entsprechendes Signal $\varepsilon^*$ vor. Diese beiden Werte gelangen an einen weiteren Wandler W, der eine Umformung dieser Größen in ein dreiphasiges Netz vornimmt, das zur Steuerung der Asynchronmaschine AM dient. Zur Feldregelung wird dem Wandler W ferner ein Frequenzsignal f* zugeleitet, auf dessen Erzeugung im folgenden noch eingegangen wird.

Im Leitungssystem zwischen dem Wandler W und der Asynchronmaschine AM ist ferner ein Meßgerät MG vorgesehen, das zum einen die Blindleistung $P_B$ und die Wirkleistung $P_W$ mißt und zum anderen den Betrag des Ständerstroms $|i_s|$ mißt und einem Rechenwerk RW zuleitet. Die Erfassung der Blindleistung $P_B$ und der Wirkleistung $P_W$ ermöglicht gemäß der Formel $\hat{\varepsilon} = \arctan (P_B/P_W)$ die Erfassung des tatsächlich vorliegenden Feldwinkels. Der Feldwinkel $\hat{\varepsilon}$ wird mit dem Ständerstromwinkel $\varepsilon^*$ verglichen und das Vergleichsergebnis gelangt an einen Feldwinkelregler FR, der ebenfalls nach Art eines PI-Reglers ausgebildet sein kann.

Zum Ausgangssignal des Feldwinkelreglers FR wird ein dem Schlupf $f_s$ der Maschine entsprechendes Signal addiert und das resultierende Signal, das der Sollfrequenz f* entspricht, gelangt an den Wandler W sowie an das Rechenwerk RW.

Von den Erfindern ist nun erkannt worden, daß dadurch, daß sich beim Frequenzsollsignal f* stets um die Summe der Schlupffrequenz $f_s$ und der tatsächlichen Frequenz der Maschine handelt, eben ein der Frequenz der Asynchronmaschine AM entsprechendes Signal $\hat{f}$ am Ausgang des Feldwinkelreglers FR vorliegt. Da die Ist-Frequenz der Maschine AM und die Ist-Drehzahl der Maschine AM nur durch den Proportionalitätsfaktor 2 miteinander verbunden sind, ist es möglich, das Ausgangssignal des Feldwinkelreglers FR einem Umsetzer U zuzuleiten, an dessen Ausgang dann die Istdrehzahl $\hat{n}$ vorliegt, die dem Drehzahlregler DR wie eingangs geschildet, zuleitbar ist. Damit kann bei der Anordnung auf einen gesonderten Lagegeber völlig verzichtet werden.

Das Rechenwerk RW ermöglicht jedoch auch die Bestimmung des vorliegenden Flusses in der Asynchronmaschine AM nach der Beziehung $\hat{\psi} = k \cdot \sqrt{P_W^2 + P_B^2} \cdot \frac{1}{|i_s|} \cdot \frac{1}{2\pi f}^*$. Damit ist es also auch möglich, den vorliegenden Fluß $\hat{\psi}$ der Asynchronmaschine im Rechenwerk RW zu bestimmen, so daß er wie eingangs geschil-

3

det, mit dem Sollfluß ψ* verglichen werden kann und dann das Differenzsignal dem Feldbetragsregler FBR zugeleitet werden kann.

Die Schlupffrequenz $f_s$ kann mit Hilfe eines Schlupfbestimmungsgliedes SBG das den Quotienten aus der feldbildenden Stromkomponente $i_{\Phi2}$* und dem Fluß $\hat{\psi}$ bildet nach Wichtung mit einem konstanten Faktor, der näherungsweise durch den Läuferwiderstand $R_L$ dividiert durch $2\pi$ entspricht, bestimmt werden.

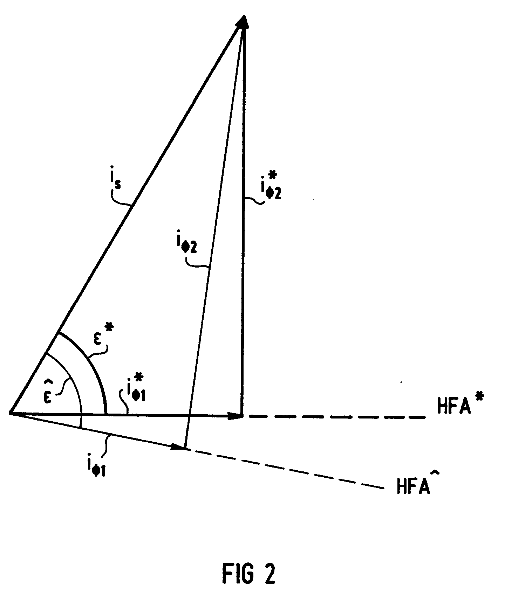

In der Darstellung gemäß FIG 2 ist in Form eines Zeigerdiagrammes dargestellt, wie die Sollstromkomponenten $i_{\Phi1}$* und $i_{\Phi2}$* zusammen den Ständerstrom $i_s$ ergeben, wobei der Ständerstrom $i_s$ zur Sollhauptfeldachse HFA* einen Soll-Ständerstromwinkel ε* einnimmt. Tatsächlich fließt im System der Asynchronmaschine AM zwar der Ständerstrom $i_s$, jedoch weichen die tatsächlichen moment- und feldbildenden Stromkomponenten $i_{\Phi1}$ und die $i_{\Phi2}$ von den Sollkomponenten $i_{\Phi1}$* und $i_{\Phi2}$* etwas ab. Das heißt, die tatsächliche Hauptfeldachse HFA ^ ist gegenüber der Soll-Hauptfeldachse HFA* etwas verdreht. Für den Regelvorgang muß nun der tatsächliche Winkel $\hat{\varepsilon}$ bestimmt werden und von den Erfindern ist erkannt worden, daß dies in besonders einfacher Weise durch die Messung der Blindleistung $P_B$ und Wirkleistung $P_W$ und der Anwendung der eingangs genannte Beziehung möglich ist.

Beim Ausführungsbeispiel wird von einer Regelung der Hauptfeldachse ausgegangen. Prinzipiell ist allerdings auch eine Regelung der Rotorfeldachse möglich.

## Patentansprüche

1. Einrichtung zum Regeln der Drehzahl einer Drehfeldmaschine (AM), wobei Mittel zum entsprechenden Generieren einer flußbildenden Stromkomponente und einer momentenbildenden Stromkomponente vorgesehen ist, wobei über einen ersten Wandler aus diesen kartesischen Stromkomponenten in Polarform ein entsprechender Ständerstrombetrag ($|i_s|$*) und ein zugehöriger Ständerstromwinkel (ε*) gebildet wird, wobei diese Soll-Größen über einen weiteren Wandler die das Drehfeld der Maschine auslösenden Ströme bestimmen und wobei Mittel zum Regeln der Feldachse vorgesehen sind, **dadurch gekennzeichnet,** daß Mittel (UG) zum Erfassen der Blindleistung ($P_B$) und der Wirkleistung ($P_W$) der Drehfeldmaschine (AM) vorgesehen sind, daß aus der prinzipiellen Beziehung

$$\hat{\varepsilon} = \text{arctan}\, (P_B/P_W)$$

   mit

   $P_B$      - Blindleistung
   $P_W$      - Wirkleistung
   $\hat{\varepsilon}$      - Ständerstromwinkel

   der vorliegende Ständerstromwinkel ($\hat{\varepsilon}$) in einem Rechenwerk (RW) bestimmt wird, daß ein der Differenz zwischen dem Soll-Ständerstromwinkel (ε*) und dem aus der obigen Beziehung bestimmten Ständerstromwinkel ($\hat{\varepsilon}$) entsprechendes Signal einem Feldwinkelregler (FR) zugeleitet wird, dessen Ausgangssignal ($\hat{f}$) additiv mit einem dem Schlupf ($f_s$) der Drehfeldmaschine (AM) entsprechenden Signal eine Sollfrequenz (f*) für den weiteren Wandler (W) vorgibt und daß das Ausgangssignal ($\hat{f}$) des Feldwinkelreglers (FR) als eine der Ist-Drehzahl ($\hat{n}$) der Drehfeldmaschine (AM) entsprechende Größe für die Drehzahlregelung dient.

2. Einrichtung nach Anspruch 1, **dadurch gekennzeichnet,** daß der Schlupf ($f_s$) über ein Schlupfbestimmungsglied (SBG) als eine dem Quotienten aus der momentenbildenden Stromkomponente ($i_{\Phi2}$*) und dem vorliegenden Fluß ($\hat{\psi}$) proportionale Größe bestimmt wird.

3. Einrichtung nach Anspruch 2, **dadurch gekennzeichnet,** daß Mittel (UG) zum Messen des Betrags des fließenden Ständerstromes ($|i_s|$) vorgesehen sind und daß der vorliegende Fluß ermittelt wird als

$$\hat{\psi} = k \cdot \sqrt{P_W^2 + P_B^2} \cdot \frac{1}{|i_s|} \cdot \frac{1}{2\pi f*}$$

   mit
   k      - Konstante
   $|i_s|$      - vorliegender Ständerstrombetrag
   f*      - Sollfrequenz
   $\hat{\psi}$      - Fluß

EP 0 553 370 B1

## Claims

1. Device for regulating the speed of a polyphase machine (AM), wherein a means is provided for the corresponding generation of a flow-producing current component and a torque-producing current component, wherein a corresponding stator current magnitude ($|i_s|$*) and an associated stator current angle ($\varepsilon$*) are formed from these cartesian current components in polar form by way of a first transformer, wherein these desired quantities determine, by way of a further transformer, the currents initiating the rotary field of the machine, and wherein means are provided for regulating the field axis, characterised in that means (UG) (sic) are provided for detecting the reactive power ($P_B$) and the active power ($P_W$) of the polyphase machine (AM), in that the stator current present angle ($\hat{\varepsilon}$) is determined in an arithmetic unit (RW) from the basic relationship

$$\hat{\varepsilon} = \text{arctan}\ (P_B/P_W)$$

wherein $P_B$ is the reactive power, $P_W$ is the active power and $\hat{\varepsilon}$ is the stator current angle, in that a signal corresponding to the difference between the stator current desired angle ($\varepsilon$*) and the stator current angle ($\hat{\varepsilon}$) determined by the above relationship is supplied to a field angle regulator (FR) whose output signal ($\hat{f}$) is added to a signal corresponding to the slip ($f_s$) of the polyphase machine (AM) in order to provide a desired frequency (f*) for the further transformer (W), and in that the output signal ($\hat{f}$) of the field angle regulator (FR) serves as a quantity corresponding to the actual speed ($\hat{n}$) of the polyphase machine (AM), for the speed regulation.

2. Device according to claim 1, characterised in the that the slip ($f_s$) is determined, by way of a slip determination element (SBG), as a quantity that is proportional to the quotient formed by the torque-producing current component ($i_{\Phi2}$*) and the present flow ($\hat{\psi}$).

3. Device according to claim 2, characterised in that means (UG) (sic) are provided for measuring the magnitude of the flowing stator current ($|i_s|$), and in that the present flow is determined as

$$\hat{\psi} = k \cdot \sqrt{P_W^2 + P_B^2} \cdot \frac{1}{|i_s|} \cdot \frac{1}{2\,\pi\,f^*}$$

where k is the constant, $|i_s|$ is the stator current present magnitude, f* is the desired frequency and $\hat{\psi}$ is the flow.

## Revendications

1. Dispositif de régulation de la vitesse de rotation d'une machine (AM) à champ tournant, des moyens de génération correspondante d'une composante de courant formant le flux et d'une composante de courant formant le couple étant prévus, un module ($|I_s^*|$) correspondant de courant statorique et un angle ($\varepsilon$*) associé de courant statorique étant formés sous forme polaire par l'intermédiaire d'un premier convertisseur à partir de ces composantes cartésiennes de courant, ces grandeurs de consigne déterminant par l'intermédiaire d'un autre convertisseur les courants déclenchant le champ tournant de la machine et des moyens de régulation de l'axe du champ étant prévus, caractérisé en ce que des moyens (UG) de détection de la puissance ($P_B$) réactive et de la puissance ($P_W$) active de la machine (AM) à champ tournant sont prévus, l'angle ($\hat{\varepsilon}$) existant de courant statorique est déterminé dans un module (RW) de calcul à partir de la relation de principe

$$\hat{\varepsilon} = \text{arctan}\ (P_B/P_W)$$

$P_B$ : puissance réactive
$P_W$ : puissance active
$\hat{\varepsilon}$ : angle de courant statorique,
un signal correspondant à la différence entre l'angle ($\varepsilon$*) de courant statorique de consigne et l'angle ($\hat{\varepsilon}$) de courant statorique déterminé à partir de la relation ci-dessus étant envoyé à un régulateur (FR) d'angle de champ, dont le signal de sortie ($\hat{f}$) prescrit, de façon additive à un signal correspondant au glissement ($f_s$) de la machine (AM) à champ tournant, une fréquence (f*) de consigne pour l'autre convertisseur (W) et le signal ($\hat{f}$) de sortie du régulateur (FR) d'angle de champ sert de grandeur correspondant à la vitesse ($\hat{n}$) réelle de rotation de la machine (AM) à champ tournant pour la régulation de la vitesse de rotation.

2. Dispositif suivant la revendication 1, caractérisé en ce que le glissement ($f_s$) est déterminé par l'intermédiaire d'un élément (SBG) de détermination du glissement en tant de grandeur proportionnelle au quotient de la composante ($i_{\Phi2}$*) de courant formant le couple et du flux ($\hat{\psi}$) existant.

5

3. Dispositif suivant la revendication 2, caractérisé en ce que des moyens (UG) de mesure du module du courant ($|i_s|$) statorique passant sont prévus et le flux existant est déterminé par

$$\hat{\psi} = k \cdot \sqrt{P_W{}^2 + P_B{}^2} \times \frac{1}{|i_s|} \times \frac{1}{2\,\pi\,f\,*}$$

| | |
|---|---|
| k | : constante |
| $|i_s|$ | : module existant de courant statorique |
| f* | : fréquence de consigne |
| $\hat{\psi}$ | : flux |

FIG 1

FIG 2